# EUROPEAN PATENT SPECIFICATION

(11) **EP 3 577 987 B1**
(45) Date of publication and mention of the grant of the patent: **05.07.2023**
(21) Application number: 18705987.8
(22) Date of filing: 06.02.2018
(51) Int. Cl.: H04W 72/566, H04W 72/0446, H04W 88/10

(54) **UPLINK PUNCTURING OF MINI-SLOT ON SLOT TRANSMISSIONS**
UPLINK-PUNKTIERUNG EINES MINISCHLITZES AUF SCHLITZÜBERTRAGUNGEN
POINÇONNAGE EN LIAISON MONTANTE DE MINICRÉNEAU SUR DES TRANSMISSIONS À CRÉNEAU

(30) Priority: 06.02.2017 US 201762455447 P
(43) Date of publication of application: 11.12.2019
(73) Proprietor: Telefonaktiebolaget LM Ericsson (publ), 164 83 Stockholm (SE)
(72) Inventor: ZOU, Zhenhua, 171 42 Solna (SE); WIKSTRÖM, Gustav, 187 30 Täby (SE); FRÖBERG OLSSON, Jonas, 590 74 Ljungsbro (SE)
(74) Representative: Ericsson
(86) International application number: PCT/IB2018/050738
(87) International publication number: WO 2018/142376

(56) References cited:
- US-A1- 2015 333 898
- US-A1- 2015 334 685
- NTT DOCOMO ET AL: "On co-existence of eMBB and URLLC", 3GPP DRAFT; R1-167391 CO-EXISTENCE OF EMBB AND URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051125879, Retrieved from the Internet: URL:http://www.3gpp.org/ftp/Meetings_3GPP_ SYNC/RAN1/Docs/ [retrieved on 2016-08-21]
- INTEL CORPORATION: "Uplink Multiplexing of eMBB and URLLC Transmissions", 3GPP DRAFT; R1-1700377 INTEL - UL_URLLC_EMBB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051207914, Retrieved from the Internet: URL:http://www.3gpp.org/ftp/Meetings_3GPP_ SYNC/RAN1/Docs/ [retrieved on 2017-01-16]
- INSTITUTE FOR INFORMATION INDUSTRY (III): "Discussion on eMBB and URLLC multiplexing in UL", 3GPP DRAFT; R1-1700586 DISCUSSION ON EMBB AND URLLC MULTIPLEXING IN UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Spokane, USA; 20170116 - 20170120 16 January 2017 (2017-01-16), XP051208115, Retrieved from the Internet: URL:http://www.3gpp.org/ftp/Meetings_3GPP_ SYNC/RAN1/Docs/ [retrieved on 2017-01-16]
- LENOVO: "Overview on URLLC design and the coexistence with eMBB", 3GPP DRAFT; R1-1700554, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, US; 20170116 - 20170120 16 January 2017 (2017-01-16), XP051208084, Retrieved from the Internet: URL:http://www.3gpp.org/ftp/Meetings_3GPP_ SYNC/RAN1/Docs/ [retrieved on 2017-01-16]

## Description

### TECHNICAL FIELD

The present disclosure generally relates to wireless communications and wireless communication networks.

### INTRODUCTION

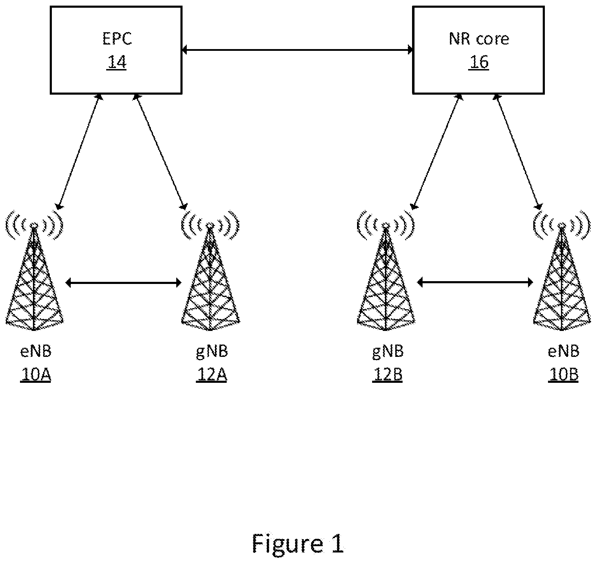

The architecture for New Radio (NR) (also known as 5G or Next Generation) is being discussed in standardization bodies such as 3GPP and an example network architecture is illustrated in Figure 1. eNB 10A-10B denotes a Long Term Evolution (LTE) eNodeB, and gNB 12A-12B denotes an NR base station (BS). One NR BS can correspond to one or more transmission/reception points. The links between the nodes illustrate the possible corresponding interfaces which may be deployed. For example, the interface between the Evolved Packet Core (EPC) node 14 and eNB 10A can be an LTE S1 interface while the interface between EPC node 14 and gNB 12A can be S1-like. The interface between an eNB 10A and gNB 12A can be similar to an X2 interface. The interface between an NR core node 16 and gNB 12B can be an NG1 interface.

In LTE, semi-persistent scheduling (SPS) has been shown to be beneficial for uplink (UL) traffic, as can be seen in the latency reduction study for LTE [3GPP TR 36.881]. The use of SPS in UL for Ultra Reliable Low Latency Communication (URLLC) in NR can potentially be similarly beneficial. To shorten the UL delay, the grant can instead be configured before UL data arrival. By doing so, steps of scheduling request (SR) and UL grant are not needed, and a UE can directly transmit in a pre-configured UL grant. The use of configured grants is also referred to as "grant-free transmission".

To achieve highly robust UL data transmissions for URLLC use cases, a low code rate is required. If the reliable transmissions also have strict latency requirements, the transmissions need to be short. These demands can lead to a preference of large bandwidth but short time allocations for URLLC in a general sense. However, if each user equipment (UE) is allocated with dedicated UL resources of large bandwidth, the network may run out of UL resources when attempting to serve a large amount of URLLC requests. Thus, it is reasonable to share UL resource between UEs for efficiency, i.e., allowing contention-based transmission if different UEs happen to have similar traffic arrivals and transmission timing.

US 2015/0333898 A1 discloses inter-band pairing of carriers for time division duplex transmit-and receive-switching and its application to multiplexing of different transmission time intervals. A scheduling entity broadcasts a thin control channel. A thin feedback channel includes a request for the scheduling entity to modify/puncture a first, long TTI with low latency packets including a second, short TTI. US 2015/0334685 A1 discloses synchronous multiplexing and multiple access for different latency targets utilizing thin control. NTT DOCOMO ET AL: "On co-existence of eMBB and URLLC", 3GPP DRAFT; R1-167391 CO-EXISTENCE OF EMBB AND URLLC, 3RD GENRATION PARTNERSHIP PROJECT (3GPP), MOBILE COMPETENCE CENTRE; 360, ROUTE DES LUCIOLES; F-06921 SOPHIA-ANTIPOLIS CEDEX; FRANCE, vol. RAN WG1, no. Gothenburg, Sweden; 20160822 - 20160826 21 August 2016 (2016-08-21), XP051125879 relates to the co-existence of eMBB and URLLC from the UE perspective and from the system perspective.

INTEL CORPORATION: "Uplink Multiplexing of eMBB and URLLC Transmissions", 3GPP DRAFT; R1-1700377 INTEL-UL_URLLC_EMBB, 3RD GENERATION PARTNERSHIP PROJECT (3GPP), MOBILE COMPETENCE CENTER; 650, ROUTE DES LUCIOLES; F-06921 SOPHIA-ANTIPOLIS CEDEX; FRANCE, vol. RAN WG1, no. Spokane, USA; 20170116 - 20170120 16 January 2017 (2017-01-16), XP051207914 deals with uplink multiplexing of eMBB and URLLC transmissions, more particularly, how to ensure co-existence of UL URLLC and eMBB transmissions by avoiding the mutual impact of URLLC and EMBB services.

Other prior art examples are: 3GPP R1-1700586, Title: "Discussion on eMBB and URLLC multiplexing in UL", Source: Institute for Information Industry (III); and 3GPP R1-1700554, Title: "Overview on URLLC design and the coexistence with eMBB", Source: Lenovo.

### SUMMARY

It is an object of the present disclosure to obviate or mitigate at least one disadvantage of the prior art.

The subject-matter of the present invention is set forth in the appended independent claims.

In a first aspect of the present disclosure, there is provided a method performed by a network node. The method includes the steps of: receiving, from a first wireless device, a scheduling request to schedule transmission of a first type of data in a mini-slot; determining that a second wireless device has a previously scheduled transmission of a second type of data overlapping with the requested mini-slot; transmitting, to the second wireless device, a first control message indicating to cancel transmission of the second type of data; and receiving, from the first wireless device, the first type of data in the mini-slot.

In another aspect of the present disclosure, there is provided a network node comprising circuitry including a processor and a memory, the memory containing instructions executable by the processor. The network node is operative to: receive, from a first wireless device, a scheduling request to schedule transmission of a first type of data in a mini-slot; determine that a second wireless device has a previously scheduled transmission of a second type of data overlapping with the requested mini-slot; transmit, to the second wireless device, a first control message indicating to cancel transmission of the second type of data; and receive, from the first wireless device, the first type of data in the mini-slot.

In some embodiments, the first control message can further indicate a grant for re-transmission of the second type of data.

In some embodiments, a second control message can be transmitted to the first wireless device indicating that the mini-slot is granted for transmission of the first type of data.

In some embodiments, the previously scheduled transmission of the second type of data and the requested mini-slot can be overlapping in at least one of time and frequency resources.

In some embodiments, the first control message can indicate to cancel transmission of the second type of data in a slot and/or a mini-slot overlapping with the requested mini-slot.

In some embodiments, it can be determined that the first wireless device and the second wireless device are a same device.

In some embodiments, the first control message can be a Downlink Control Information (DCI) message.

In some embodiments, it can be determined that the first type of data is prioritized for transmission over the second type of data. The first type of data can be Ultra-Reliable Low Latency Communication (URLLC) traffic. The second type of data can be enhanced Mobile Broadband (eMBB) traffic.

In some embodiments, the received scheduling request can be a URLLC-SR message. The scheduling request can be received in a first mini-slot. The first type of data can be received in a second mini-slot.

In another aspect of the present disclosure, there is provided a method performed by a first wireless device. The method includes the steps of: transmitting a scheduling request to schedule transmission of a first type of data in a mini-slot; determining if the first wireless device has a previously scheduled transmission; responsive to determining that the first wireless device has a scheduled transmission of a second type of data overlapping with the requested mini-slot, cancelling transmission of the second type of data in the mini-slot; and transmitting the first type of data in the mini-slot.

In another aspect of the present disclosure, there is provided a first wireless device comprising circuitry including a processor and a memory, the memory containing instructions executable by the processor. The first wireless device is operative to: transmit a scheduling request to schedule transmission of a first type of data in a mini-slot; determine if the first wireless device has a previously scheduled transmission; responsive to determining that the first wireless device has a scheduled transmission of a second type of data overlapping with the requested mini-slot, cancel transmission of the second type of data in the mini-slot; and transmit the first type of data in the mini-slot.

In some embodiments, the first wireless device can receive a first control message indicating that the requested mini-slot is granted for transmission of the first type of data.

In some embodiments, the first wireless device can receive a second control message indicating a grant for re-transmission of the second type of data.

In some embodiments, the first wireless device can determine that the first type of data is prioritized for transmission over the second type of data.

In some embodiments, the previously scheduled transmission of the second type of data and the requested mini-slot are overlapping in at least one of time and frequency resources.

In another aspect of the present disclosure, there is provided a method performed by a second wireless device. The method includes the steps of: receiving a control message indicating to cancel transmission of data in a mini-slot; identifying a previously scheduled slot transmission overlapping with the mini-slot; and cancelling the identified overlapping previously scheduled slot transmission.

In another aspect of the present disclosure, there is provided a second wireless device comprising circuitry including a processor and a memory, the memory containing instructions executable by the processor. The second wireless device is operative to: receive a control message indicating to cancel transmission of data in a mini-slot; identify a previously scheduled slot transmission overlapping with the mini-slot; and cancel the identified overlapping previously scheduled slot transmission.

In some embodiments, the control message can further indicate a grant for re-transmission of the cancelled data transmission.

The various aspects and embodiments described herein can be combined alternatively, optionally and/or in addition to one another.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached Figures, wherein:
Figure 1 illustrates an example NR architecture;
Figure 2 illustrates an example wireless network;
Figure 3 illustrates an example of intra-node puncturing;
Figure 4 illustrates an example of inter-node puncturing;
Figure 5 is a flow chart illustrating a method which can be performed in a first wireless device;
Figure 6 is a flow chart illustrating a method which can be performed in a network node;
Figure 7 is a flow chart illustrating a method which can be performed in a second wireless device;
Figure 8 is a block diagram of an example wireless device;
Figure 9 is a block diagram of an example network node;
Figure 10 is a block diagram of an example wireless device with modules; and
Figure 11 is a block diagram of an example network node with modules.

### DETAILED DESCRIPTION

The embodiments set forth below represent information to enable those skilled in the art to practice the embodiments. Upon reading the following description in light of the accompanying drawing figures, those skilled in the art will understand the concepts of the description and will recognize applications of these concepts not particularly addressed herein. It should be understood that these concepts and applications fall within the scope of the description.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

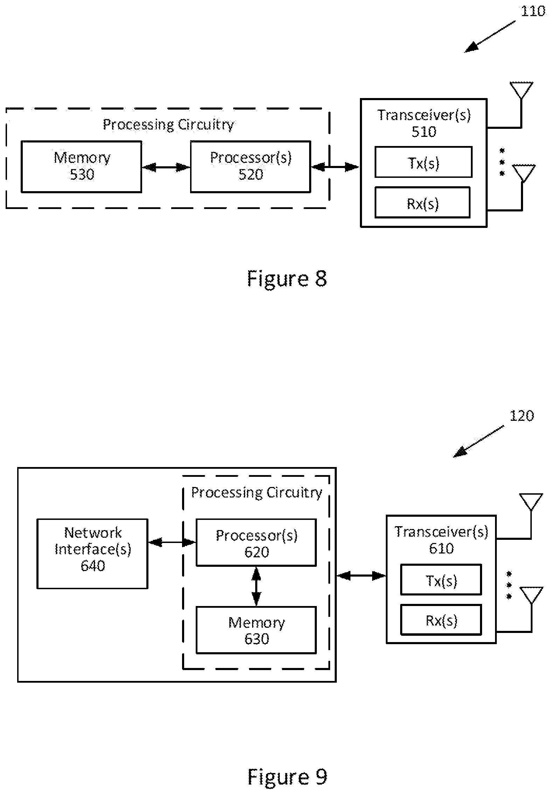

In some embodiments, the non-limiting term "user equipment" (UE) is used and it can refer to any type of wireless device which can communicate with a network node and/or with another UE in a cellular or mobile or wireless communication system. Examples of UE are target device, device to device (D2D) UE, machine type UE or UE capable of machine to machine (M2M) communication, personal digital assistant, tablet, mobile terminal, smart phone, laptop embedded equipped (LEE), laptop mounted equipment (LME), USB dongles, ProSe UE, V2V UE, V2X UE, MTC UE, eMTC UE, FeMTC UE, UE Cat 0, UE Cat M1, narrow band IoT (NB-IoT) UE, UE Cat NB1, etc. Example embodiments of a UE are described in more detail below with respect to Figure 8.

In some embodiments, the non-limiting term "network node" is used and it can correspond to any type of radio access node (or radio network node) or any network node, which can communicate with a UE and/or with another network node in a cellular or mobile or wireless communication system. Examples of network nodes are NodeB, MeNB, SeNB, a network node belonging to MCG or SCG, base station (BS), multi-standard radio (MSR) radio access node such as MSR BS, eNodeB, network controller, radio network controller (RNC), base station controller (BSC), relay, donor node controlling relay, base transceiver station (BTS), access point (AP), transmission points, transmission nodes, RRU, RRH, nodes in distributed antenna system (DAS), core network node (e.g. MSC, MME, etc.), O&M, OSS, Self-organizing Network (SON), positioning node (e.g. E-SMLC), MDT, test equipment, etc. Example embodiments of a network node are described in more detail below with respect to Figure 9.

In some embodiments, the term "radio access technology" (RAT) refers to any RAT e.g. UTRA, E-UTRA, narrow band internet of things (NB-IoT), WiFi, Bluetooth, next generation RAT (NR), 4G, 5G, etc. Any of the first and the second nodes may be capable of supporting a single or multiple RATs.

The term "radio node" used herein can be used to denote a wireless device or a network node.

In some embodiments, a UE can be configured to operate in carrier aggregation (CA) implying aggregation of two or more carriers in at least one of downlink (DL) and uplink (UL) directions. With CA, a UE can have multiple serving cells, wherein the term 'serving' herein means that the UE is configured with the corresponding serving cell and may receive from and/or transmit data to the network node on the serving cell e.g. on PCell or any of the SCells. The data is transmitted or received via physical channels e.g. PDSCH in DL, PUSCH in UL, etc. A component carrier (CC) also interchangeably called as carrier or aggregated carrier, PCC or SCC is configured at the UE by the network node using higher layer signaling e.g. by sending RRC configuration message to the UE. The configured CC is used by the network node for serving the UE on the serving cell (e.g. on PCell, PSCell, SCell, etc.) of the configured CC. The configured CC is also used by the UE for performing one or more radio measurements (e.g. RSRP, RSRQ, etc.) on the cells operating on the CC, e.g. PCell, SCell or PSCell and neighboring cells.

In some embodiments, a UE can also operate in dual connectivity (DC) or multi-connectivity (MC). The multicarrier or multicarrier operation can be any of CA, DC, MC, etc. The term "multicarrier" can also be interchangeably called a band combination.

The term "radio measurement" used herein may refer to any measurement performed on radio signals. Radio measurements can be absolute or relative. Radio measurements can be e.g. intra-frequency, inter-frequency, CA, etc. Radio measurements can be unidirectional (e.g., DL or UL or in either direction on a sidelink) or bidirectional (e.g., RTT, Rx-Tx, etc.). Some examples of radio measurements: timing measurements (e.g., propagation delay, TOA, timing advance, RTT, RSTD, Rx-Tx, etc.), angle measurements (e.g., angle of arrival), power-based or channel quality measurements (e.g., path loss, received signal power, RSRP, received signal quality, RSRQ, SINR, SNR, interference power, total interference plus noise, RSSI, noise power, CSI, CQI, PMI, etc.), cell detection or cell identification, RLM, SI reading, etc. The measurement may be performed on one or more links in each direction, e.g., RSTD or relative RSRP or based on signals from different transmission points of the same (shared) cell.

The term "signaling" used herein may comprise any of: high-layer signaling (e.g., via RRC or a like), lower-layer signaling (e.g., via a physical control channel or a broadcast channel), or a combination thereof. The signaling may be implicit or explicit. The signaling may further be unicast, multicast or broadcast. The signaling may also be directly to another node or via a third node.

The term "time resource" used herein may correspond to any type of physical resource or radio resource expressed in terms of length of time. Examples of time resources include: symbol, time slot, sub-frame, radio frame, TTI, interleaving time, etc. The term "frequency resource" may refer to sub-band within a channel bandwidth, subcarrier, carrier frequency, frequency band. The term "time and frequency resources" may refer to any combination of time and frequency resources.

Some examples of UE operation include: UE radio measurement (see the term "radio measurement" above), bidirectional measurement with UE transmitting, cell detection or identification, beam detection or identification, system information reading, channel receiving and decoding, any UE operation or activity involving at least receiving of one or more radio signals and/or channels, cell change or (re)selection, beam change or (re)selection, a mobility-related operation, a measurement-related operation, a radio resource management (RRM)-related operation, a positioning procedure, a timing related procedure, a timing adjustment related procedure, UE location tracking procedure, time tracking related procedure, synchronization related procedure, MDT-like procedure, measurement collection related procedure, a CA-related procedure, serving cell activation/deactivation, CC configuration/deconfiguration, etc.

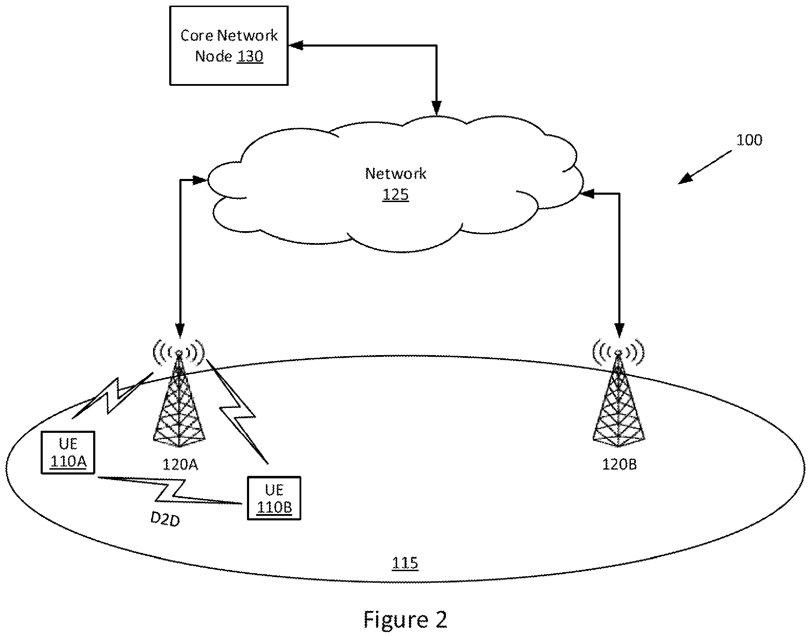

Figure 2 illustrates an example of a wireless network 100 that can be used for wireless communications. Wireless network 100 includes wireless devices, such as UEs 110A-110B, and network nodes, such as radio access nodes 120A-120B (e.g. eNBs, gNBs, etc.), connected to one or more core network nodes 130 via an interconnecting network 125. The network 100 can use any suitable deployment scenarios. UEs 110 within coverage area 115 can each be capable of communicating directly with radio access nodes 120 over a wireless interface. In some embodiments, UEs 110 can also be capable of communicating with each other via D2D communication.

As an example, UE 110A can communicate with radio access node 120A over a wireless interface. That is, UE 110A can transmit wireless signals to and/or receive wireless signals from radio access node 120A. The wireless signals can contain voice traffic, data traffic, control signals, and/or any other suitable information. In some embodiments, an area of wireless signal coverage 115 associated with a radio access node 120 can be referred to as a cell.

The interconnecting network 125 can refer to any interconnecting system capable of transmitting audio, video, signals, data, messages, etc., or any combination of the preceding. The interconnecting network 125 can include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the core network node 130 can manage the establishment of communication sessions and other various other functionalities for UEs 110. Examples of core network node 130 can include mobile switching center (MSC), MME, serving gateway (SGW), packet data network gateway (PGW), operation and maintenance (O&M), operations support system (OSS), SON, positioning node (e.g., Enhanced Serving Mobile Location Center, E-SMI,C), MDT node, etc. UEs 110 can exchange certain signals with the core network node using the non-access stratum layer. In non-access stratum signaling, signals between UEs 110 and the core network node 130 can be transparently passed through the radio access network. In some embodiments, radio access nodes 120 can interface with one or more network nodes over an internode interface.

In order to meet the URLLC requirement of 1 - 10⁻⁵ reliability within 1 ms, the collision probability of contention-based uplink transmission should be controlled within a small value. This can limit how many URLLC UEs can share the same resource and can put a limitation on the highest of the traffic arrival rates. It can also function poorly when the traffic arrivals among contending UEs are positively-correlated.

Embodiments of the present disclosure are directed to dealing with a cell serving multiple types of wireless devices and data, in which a first type of traffic (e.g. URLLC traffic) can be transmitted on mini-slots and a second type of traffic (e.g. enhanced Mobile Broadband (eMBB) traffic) can be transmitted on slots. In a grant-free fashion, a URLLC UE can transmit on mini-slots and puncture the same, or the other, UE's already granted slot transmissions.

A dedicated label in a mini-slot SR channel can be allocated, termed as a URLLC-SR. The URLLC UE can send or toggle the URLLC-SR once it has data to transmit. The data can puncture other granted slot-transmissions from the same UE or other UE(s). This can happen simultaneously with the URLLC-SR or with a pre-defined delay, with or without an explicit grant from the gNB.

In the case of inter-node puncturing, a gNB can send a fast stop Downlink Control Information (DCI) to stop transmissions from eMBB UE(s). The URLLC-SR can also serve as an indication of the puncture location.

In some embodiments, an uplink URLLC transmission can puncture eMBB traffic, instead of contending with any fellow URLLC UEs or waiting for a free resource. This can free up a wider frequency region for URLLC traffic and can allow for supporting a higher number of URLLC UEs with infrequent traffic.

To reduce the latency in the uplink access, it will be assumed that URLLC traffic uses mini-slot transmission of 2 Orthogonal Frequency Division Multiplexing (OFDM) symbols. On the other hand, eMBB traffic uses slot transmission with 7 OFDM symbols, or longer. For illustrative purposes, some embodiments will describe the puncturing of the 2-symbol mini-slot transmission onto the 7-symbol slot transmission. URLLC UEs are allocated a dedicated allocation in a mini-slot SR channel (referred to as URLLC-SR) resources with mini-slot periodicity. It is noted that this dedicated URLLC-SR label requires fewer resources than data transmissions as in SPS framework.

A gNB can identify a UE from the UE's transmission of a URLLC-SR.

In a general scenario, suppose that URLLC UE1 110A has data to send. It can toggle or send a URLLC-SR in mini-slot *m.* This URLLC-SR overlaps in time with slot *n* of an eMBB transmission from a second UE (e.g. UE2 110B). A possible transmit opportunity may also be in the next slot, n+1, where a third UE (e.g. UE3) is scheduled. URLLC UE1 110A can transmit in mini-slot *m+x* (where x is >= 0 and can have different values) with or without any grant indications from gNB 120A. The gNB 120A expects URLLC UE1's transmission in mini-slot *m+x.* The gNB 120A can foresee a collision and can send an indication to stop transmission (e.g. a DCI) to the eMBB UE(s), such as UE2/UE3.

Embodiments will be described herein detailing the operations depending on whether UE2 and/or UE3 is equal to (e.g. is the same device as) UE1, or not.

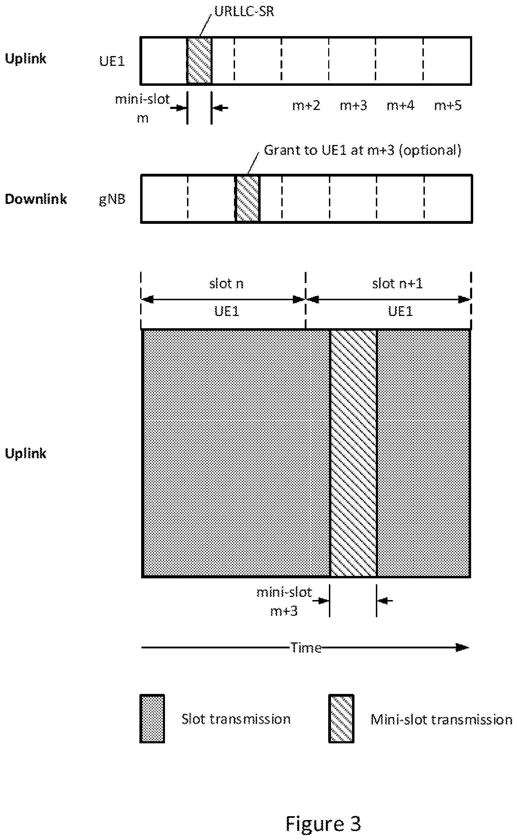

Figure 3 illustrates an example algorithm for intra-node puncturing. In this embodiment, UE1 and at least one of UE2 and/or UE3 are determined to be the same device. In other words, UE1 will puncture its own previously scheduled slot transmission with a mini-slot transmission. If URLLC UE1 already has uplink grants in slot-level for eMBB traffic in slot *n,* then it will stop transmitting data in mini-slot *m* and transmit URLLC data in *m+x* where x >= 0. It is noted that URLLC-SR is first transmitted in mini-slot m. Transmission of data in mini-slot m implicates simultaneous data and SR transmission. Waiting until slot *m+x* for any x > 0 allows the gNB to prepare, and also allows for separation of SR and data transmissions.

In some embodiments, actions by the UE include: Detect that UE1 is the same device as UE2 and/or UE3. Stop/cancel transmitting slot data (e.g. eMBB data) in slot *n* or *n+1* from mini-slot *m.* Transmit URLLC-SR in mini-slot *m.* Transmit URLLC data in mini-slot *m+x* (where x >= 0 and configurable).

In some embodiments, actions by the gNB include: Detect URLLC-SR. Detect UE identity. Determine that UE1 is the same device as UE2 and/or UE3. Receive URLLC data in mini-slot *m+x* (where x >= 0 and configurable).

In the example illustrated in Figure 3, UE1 sends an URLLC-SR in mini-slot *m.* The gNB can optionally respond with a grant to transmit in, for example, mini-slot m+3. UE1 punctures its previously scheduled slot transmission in slot n+1 with mini-slot transmission *m+3.*

In some cases, the mini-slot transmission can re-use the downlink control information region allocated to the slot transmission. The duration of the URLLC transmission may be limited to 1 millisecond (ms). A time counter can be started at the UE. The downlink control information that contains the Hybrid Automatic Repeat Request (HARQ) feedback can be interpreted as the mini-slot feedback within this 1 ms time period. The downlink control information after the expiry of the time-counter is for the slot transmission.

In another embodiment, the downlink control information region can be simultaneously re-used for both slot and mini-slot transmission with the extra indication overhead. Alternatively, separate downlink control resources for mini-slot transmissions can be implicitly inferred or explicitly allocated.

In some embodiments, a URLLC retransmission can be prioritized over a eMBB retransmission.

In the simple case where a dedicated 1 ms region is used for mini-slot transmission, any further transmission within this region can be interpreted as URLLC retransmissions and any transmission with NDI=0 after this region can be interpreted as eMBB retransmissions.

In another embodiment, the reserved region can be adjustable and stopped earlier after receiving the ACK within the 1 ms region for mini-slot transmission.

In embodiments without URLLC-SR indication, a gap period between the slot transmission and compulsory Demodulation Reference Signal (DMRS) in the mini-slot transmission can help the blind detection in the gNB. A separate URLLC-SR is not needed. In particular, it could be possible to help the gNB to detect a URLLC puncturing by having a silent period of, for example, 1 OFDM symbol in between the terminated eMBB transmission and the start of the URLLC transmission. Together with the presence of DMRS in the URLLC transmission at certain locations, the gNB could blindly detect a URLLC transmission.

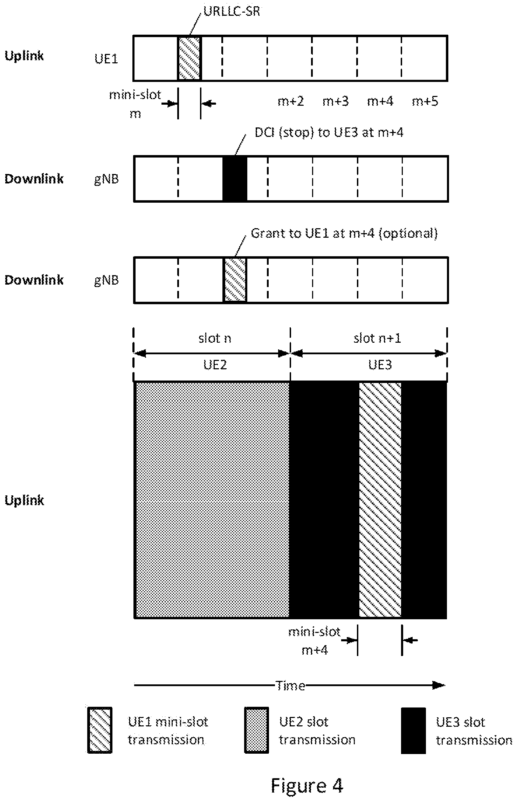

Figure 4 illustrates an example algorithm for inter-node puncturing. In this embodiment, it is determined that UE1 is not the same device as UE2 and/or UE3. In other words, UE1 will puncture another device's slot transmission with a mini-slot transmission.

If URLLC UE1 does not have an uplink grant, it then must puncture the eMBB transmission of another UE. An issue in this scenario is that UE2/UE3 are not aware of what UE1 is planning or doing.

The gNB, on the other hand, is aware that URLLC UE1 has requested a URLLC UL transmission by receiving URLLC-SR in mini-slot *m.* Upon receiving this indication, gNB can determine that UE1 is different from UE2 and UE3.

In some embodiments, the gNB can transmit a grant for the URLLC UE.

The gNB can check whether a transmission in *m+k+l* would overlap with eMBB UE2's slot transmission *n* in time. It can also check if *m+k+l* overlaps with a coming transmission by another UE, UE3, in the next slot *n*+*1.* In the case(s) where overlap exists, the gNB can send a UL DCI with NDI=toggled for the relevant HARQ process to UE2 (e.g. the current eMBB transmitter) or UE3 (e.g. the future eMBB transmitter). If UE2 or UE3 correspond to multiple UEs, the gNB will transmit multiple messages. The gNB can also send a UL DCI with NDI=0 to UE1 (e.g. the URLLC transmitter). It is noted that the second message may be sent also without the first, as in normal UL scheduling operation.

These DCI transmissions can be sent with the shortest possible delay in mini-slot *m+k* where *k* is greater than or equal to 1. UE2, which is also monitoring the mini-slot DL control channel, can stop transmitting upon receiving the DCI message in *m+k,* thereby being silent starting from *m*+*k*+*1.* UE1 can then transmit in mini-slot *m*+*k*+*l* according to the defined timing, where *l* is greater than or equal to 1.

Since the gNB knows the puncture location/timing, no separate indication, as in the DL case, is required.

In some embodiments actions by UE1 include: Determine UE1 is not equal to UE2 and/or UE3. Transmit URLLC-SR in mini-slot *m.* Receive UL DCI in *m+k.* Transmit UL data in *m*+*k*+*l.*

In some embodiments actions by UE2/UE3 include: Receive UL DCI with toggled DCI for ongoing/scheduled HARQ process in *m+k.* Identify overlap with ongoing/scheduled transmission in *n* or *n*+*1.* Stop/cancel transmission from *m*+*k*-*1.*

In some embodiments actions by gNB include: Receive URLLC-SR in *m.* Determine that UE1 is different from UE2/UE3 (multiple possible). Identify that *m*+*k*+*l* overlaps with *n or n*+*1.* Transmit UL DCI with toggled NDI for ongoing/scheduled HARQ process to UE2/UE3 in *m+k.* Transmit UL DCI with NDI=0 to UE1 in *m+k.* Receive data from UE1 in *m*+*k*+*l.*

In the example illustrated in Figure 4, UE1 sends an URLLC-SR in mini-slot *m.* The gNB transmits a control message (DCI) to UE3 indicating to stop transmission at mini-slot *m+4.* The gNB can optionally respond to UE1 with a grant to transmit in mini-slot *m+4.* UE1 punctures the previously scheduled slot transmission of UE3 in slot n+1 with a mini-slot transmission at m+4.

In other embodiments of inter-node puncturing, the gNB does not transmit a grant for the URLLC UE. In this case, the gNB does not send NDI to UE1. Instead, UE1 can prepare the mini-slot transmission in mini-slot *m+y* where *y* is configurable, greater than or equal to 0 but smaller than the normal timing with dynamic scheduling.

In some embodiments actions by UE1 include: Determine that UE1 is not equal to UE2 and/or UE3. Transmit URLLC-SR in mini-slot *m.* Transmit UL data in *m+y* (where *y* >= 0).

In some embodiments actions by UE2/UE3 include: Receive UL DCI with toggled DCI for ongoing/scheduled HARQ process in *m+k* (where *k <= y).* Identify overlap with ongoing/scheduled transmission in *n* or n+1. Stop/cancel transmission from *m+y.*

In some embodiments actions by gNB include: Receive URLLC-SR in *m.* Identify UE1 is different from UE2/UE3 (multiple possible). Identify that *m+y* overlaps with *n or n +* 1. Transmit UL DCI with toggled NDI for ongoing/scheduled HARQ process to UE2/UE3 in *m+k* (where *k <= y).* Receive data from UE1 in *m+y.*

In some embodiments, the gNB does not send any DCI messages to UE1 or UE2/UE3. The UE1 proceeds to transmit in *m+1,* while also inserting DMRS. The gNB is prepared to receive a simultaneous URLLC transmission from UE1 while also receiving the eMBB transmission from UE2. UE1's retransmission can be prioritized over UE2's retransmission. UE1 receives DCI with normal HARQ operation, which stops after the 1 ms delay. UE2 may need to receive a halt message to withhold the retransmission for a period of time.

In some embodiments, there is only one dedicated URLLC UE permitted to puncture one slot-region. In other embodiments, several URLLC UEs can be allowed to puncture one slot-region. In this case, another UE, URLLC UE4, might also happen to puncture the same region. The URLLC-SR can help to detect both the URLLC UEs and the puncture location.

The above described solutions can be summarized in two mechanisms depending on the option of whether the URLLC UE receives a grant or does not receive a grant. The general scenario is that a URLLC UE wants a mini-slot transmission at *m* and punctures a slot-transmission from UE2 at slot *n* or UE3 at slot *n+1.*
**Option A:** No grant from gNB to mini-slot UE1
   Parameters: x_1 >= 0, x_2 >= 0, 1 <= k <= x_2
   **URLLC UE1:**
   1) Send URLLC-SR in mini-slot m
   2) If UE1 has other allocated slot-transmissions in m+x_1, send data in mini-slot m+x 1
   3) Else, send data in mini-slot m+x_2
   gNB:
   1) Detect URLLC-SR, and find ongoing slot transmission from UE2 and/or upcoming slot transmission from UE3
   2) Detect UE identity in URLLC-SR
   2a) If UE1 = UE2/UE3, then receive URLLC data from UE1 in m+x_1
   2b) Else, transmit UL DCI with toggled NDI for ongoing/scheduled HARQ process to UE2/UE3 in m+k, and receive URLCC data in m+x_2
   **eMBB UE2/UE3:**
   1) Receive UL DCI with toggled DCI for ongoing/scheduled HARQ process in m+k
   2) Identify overlap with ongoing/scheduled transmission in n or n + 1
   3) Stop/cancel transmission from latest m+x_2
**Option B:** Grant from gNB to mini-slot UE1
   Parameters: x 1 >= 0, k >= 1, l>= 1, x_2 = k+l
   **URLLC UE1:**
   1) Send URLLC-SR in mini-slot m
   2) If UE1 has other allocated slot-transmissions in m+x_1, send data in mini-slot m+x 1
   3) Else, receive UL DCI in mini-slot m+k, and then send data in mini-slot m+k+l
   **gNB:**
   1) Detect URLLC-SR, and find ongoing slot transmission UE2 and/or upcoming slot transmission UE3
   2) Detect UE identity in URLLC-SR
   2a) If UE1 = UE2/UE3, then receive URLLC data from UE1 in m+x_1
   2b) Else, transmit UL DCI with toggled NDI for ongoing/scheduled HARQ process to UE2/UE3 in mini-slot m+k, transmit UL DCI with NDI=0 to UE1 in mini-slot m+k and receive URLCC data from UE1 in m+k+l
   **eMBB UE2/UE3:**
   1) Receive UL DCI with toggled DCI for ongoing/scheduled HARQ process in m+k.
   2) Identify overlap with ongoing/scheduled transmission in n or n + 1.
   3) Stop/cancel transmission from m+x_2 where x 2 = k + 1 (this is similar as in Option A with configured parameters)

For mini-slot transmission, an SR-like message can be sent from a UE to a network node to indicate the intention to preempt slot transmissions. The subsequent mini-slot transmissions from the UE can occur with or without explicit grants from the network node. The network node can use this indication to stop slot transmissions and schedule slot retransmissions.

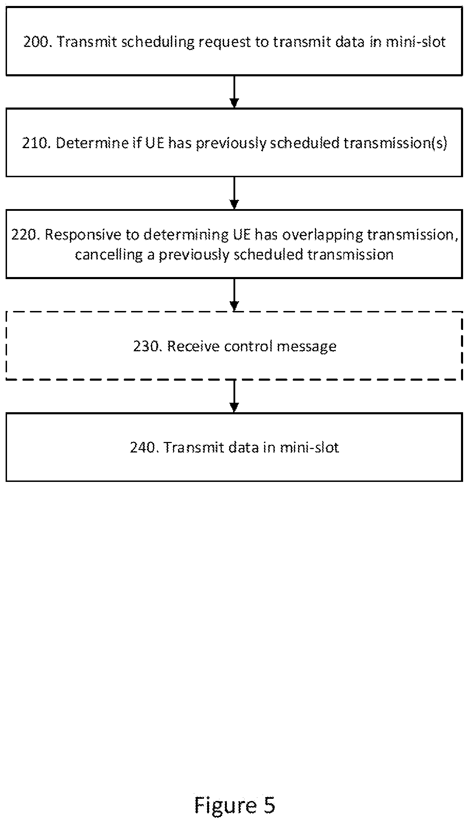

Figure 5 is a flow chart illustrating a method which can be performed in a first wireless device (UE1), such as UE 110. The method can include:
Step 200: Transmitting a scheduling request, such as a URLLC-SR message, to schedule transmission of a first type of data, such as URLLC data, in a mini-slot (m). The scheduling request can be transmitted to a network node such as gNB 120.
Step 210: Determining if the first wireless device has other (allocated) previously scheduled transmissions. In some embodiments, the first wireless device may already have existing uplink grant(s) for transmitting data in a slot.
Step 220: Responsive to determining that the first wireless has a scheduled transmission of a second type of data (e.g. eMBB data) overlapping with the requested mini-slot, the first wireless device can cancel the previously scheduled transmission. In some embodiments, cancelling the transmission can include stopping transmission of the second type of data in a slot overlapping with the requested mini-slot. In some embodiments, cancelling the transmission can include stopping transmission of the second type of data in a mini-slot overlapping with the requested mini-slot.

In some embodiments, it can be determined that the first type of data is prioritized for transmission over the second type of data.

In some embodiments, the previously scheduled transmission of the second type of data and the requested mini-slot can be overlapping in time and/or frequency resources.

Step 230: The first wireless device can optionally receive a control message, such as a UL DCI for example, in mini-slot *m+k.* The control message can be received from a network node such as a gNB. In some embodiments, the control message can be a grant indication message indicating a slot or mini-slot granted for data transmission.

In some embodiments, the control message can further indicate to cancel transmission of the second type of data. In some embodiments, the control message can further indicate a grant to re-transmit the second type of data. In some embodiments, different control messages can be used to signal the different indications.

Step 240: The first wireless device can then transmit the first type of (e.g. URLLC) data in a mini-slot. The mini-slot can be any one of mini-slots *m+x_1*, *m*+*x*_*2* or *m*+*k*+*l* as discussed herein. The mini-slot to be used for data transmission can be indicated in the optionally received grant indication in a control message.

It will be appreciated that one or more of the above steps can be performed simultaneously and/or in a different order. Also, steps illustrated in dashed lines are optional and can be omitted in some embodiments.

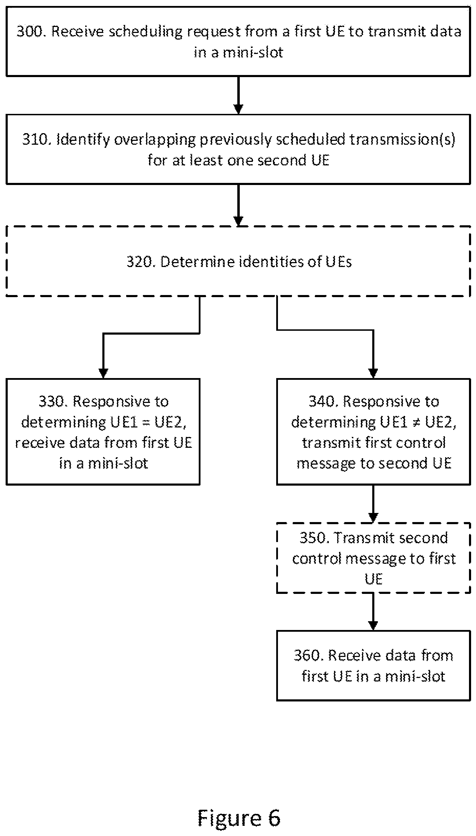

Figure 6 is a flow chart illustrating a method which can be performed in a network node such as radio access node 120. The network node can be a gNB 120 as has been described herein. The method can include:
Step 300: Receiving a scheduling request, such as a URLLC-SR, from a first wireless device (UE1) to schedule transmission of a first type of data, such URLLC data, in a mini-slot (m).
Step 310: Identifying ongoing and upcoming slot transmission(s) from at least one second UE (UE2/UE3). This can include determining that a second wireless device (UE2) has a previously scheduled transmission of a second type of data that overlaps with the requested mini-slot. The previously scheduled transmission of the second type of data and the requested mini-slot can be overlapping in time and/or frequency resources.
Step 320: Optionally, determining the identities of the wireless devices. For example, the identity of the first wireless device (UE1) can be determined from the received scheduling request (e.g. the URLLC-SR). The network node can then compare the UE identities associated with the received scheduling request and any identified previously scheduled transmissions, for example, a slot transmission of a second type of data by UE2.

In some embodiments, it can be determined that the first type of data is prioritized for transmission over the second type of data.

Step 330: Responsive to determining that the first wireless device (UE1) and the second wireless device (UE2) are identical (e.g. they are the same device), the network node can receive data, such URLLC data, from the first wireless device in a first mini-slot. The first mini-slot can be mini-slot *m*+*x_1* as discussed herein. In some embodiments, the network node can optionally transmit a control message including a grant indication to the first wireless device.

Step 340: Responsive to determining that the first wireless device and the second wireless device have different identities (e.g. they are different devices), the network node can transmit a first control message, such as a UL DCI, to the second wireless device. In some embodiments, the UL DCI can include sending a toggled NDI for ongoing or scheduled HARQ process(es) to the second UE in mini-slot *m+k.* In some embodiments, the first control message can include an indication to cancel/stop transmission of the second type of data that overlaps with the requested mini-slot. In some embodiments, the first control message can further include an indication to cancel/stop transmission at a particular slot or mini-slot. In some embodiments, the first control message can further include a grant indication for retransmission of the second type of data.

Step 350: The network node can optionally transmit a second control message, such as a UL DCI, to the first wireless device (UE1). In some embodiments, the UL DCI can include sending a NDI=0 to the first wireless device in mini-slot *m+k.* In some embodiments, the second control message can be a grant indication message indicating a slot or mini-slot granted for transmitting the first type of data.

Step 360: The network node can then receive the first type of data (e.g. the URLLC data) from the first wireless device in a mini-slot. The mini-slot can be any one of mini-slots *m+x 1, m*+*x*_*2* or *m*+*k*+*l* as discussed herein.

It will be appreciated that one or more of the above steps can be performed simultaneously and/or in a different order. Also, steps illustrated in dashed lines are optional and can be omitted in some embodiments.

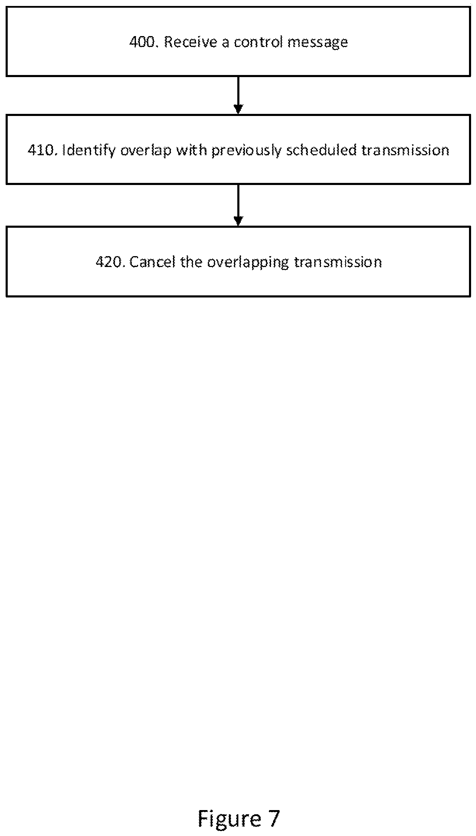

Figure 7 is a flow chart illustrating a method which can be performed in a second wireless device (UE2/UE3), such as UE 110. The method can include:
Step 400: Receiving a control message, such as a UL DCI message. The control message can be received from a network node, such as a gNB 120. The control message can indicate to cancel transmission of data at a given time. The UL DCI can include a toggled NDI for ongoing or scheduled HARQ process(es) in a slot or mini-slot such as mini-slot *m+k.*

In some embodiments, the control message can further indicate a grant for retransmission of the cancelled data transmission.

Step 410: Identifying an overlap associated with an ongoing or previously scheduled transmission in a slot indicated by the received UL DCI. In some embodiments, this can be slot n or n+1 as have been described herein.

Step 420: Stopping or cancelling the identified overlapping transmission. In some embodiments, this can include cancelling transmission(s) from mini-slot *m*+*x_2*. In some embodiments, *x_2* = *k* + *l.*

It will be appreciated that one or more of the above steps can be performed simultaneously and/or in a different order. Also, steps illustrated in dashed lines are optional and can be omitted in some embodiments.

Figure 8 is a block diagram of an example wireless device, UE 110, in accordance with certain embodiments. UE 110 includes a transceiver 510, processor 520, and memory 530. In some embodiments, the transceiver 510 facilitates transmitting wireless signals to and receiving wireless signals from radio access node 120 (e.g., via transmitter(s) (Tx), receiver(s) (Rx) and antenna(s)). The processor 520 executes instructions to provide some or all of the functionalities described above as being provided by UE, and the memory 530 stores the instructions executed by the processor 520. In some embodiments, the processor 520 and the memory 530 form processing circuitry.

The processor 520 can include any suitable combination of hardware to execute instructions and manipulate data to perform some or all of the described functions of a wireless device, such as the functions of UE 110 described above. In some embodiments, the processor 520 may include, for example, one or more computers, one or more central processing units (CPUs), one or more microprocessors, one or more application specific integrated circuits (ASICs), one or more field programmable gate arrays (FPGAs) and/or other logic.

The memory 530 is generally operable to store instructions, such as a computer program, software, an application including one or more of logic, rules, algorithms, code, tables, etc. and/or other instructions capable of being executed by a processor 520. Examples of memory 530 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information, data, and/or instructions that may be used by the processor 520 of UE 110.

Other embodiments of UE 110 may include additional components beyond those shown in Figure 8 that may be responsible for providing certain aspects of the wireless device's functionalities, including any of the functionalities described above and/or any additional functionalities (including any functionality necessary to support the solution described above). As just one example, UE 110 may include input devices and circuits, output devices, and one or more synchronization units or circuits, which may be part of the processor 520. Input devices include mechanisms for entry of data into UE 110. For example, input devices may include input mechanisms, such as a microphone, input elements, a display, etc. Output devices may include mechanisms for outputting data in audio, video and/or hard copy format. For example, output devices may include a speaker, a display, etc.

It will be appreciated that wireless device UE 110 can be operative to perform the functions of UE1, UE2, UE3 and/or other devices described in the embodiments herein.

Figure 9 is a block diagram of an exemplary network node 120, in accordance with certain embodiments. Network node 120 may include one or more of a transceiver 610, processor 620, memory 630, and network interface 640. In some embodiments, the transceiver 610 facilitates transmitting wireless signals to and receiving wireless signals from wireless devices, such as UE 110 (e.g., via transmitter(s) (Tx), receiver(s) (Rx), and antenna(s)). The processor 620 executes instructions to provide some or all of the functionalities described above as being provided by a network node 120, the memory 630 stores the instructions executed by the processor 620. In some embodiments, the processor 620 and the memory 630 form processing circuitry. The network interface 640 can communicate signals to backend network components, such as a gateway, switch, router, Internet, Public Switched Telephone Network (PSTN), core network nodes or radio network controllers, etc.

The processor 620 can include any suitable combination of hardware to execute instructions and manipulate data to perform some or all of the described functions of network node 120, such as those described above. In some embodiments, the processor 620 may include, for example, one or more computers, one or more central processing units (CPUs), one or more microprocessors, one or more application specific integrated circuits (ASICs), one or more field programmable gate arrays (FPGAs) and/or other logic.

The memory 630 is generally operable to store instructions, such as a computer program, software, an application including one or more of logic, rules, algorithms, code, tables, etc. and/or other instructions capable of being executed by a processor 620. Examples of memory 630 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, the network interface 640 is communicatively coupled to the processor 620 and may refer to any suitable device operable to receive input for network node 120, send output from network node 120, perform suitable processing of the input or output or both, communicate to other devices, or any combination of the preceding. The network interface 640 may include appropriate hardware (e.g., port, modem, network interface card, etc.) and software, including protocol conversion and data processing capabilities, to communicate through a network.

Other embodiments of network node 120 can include additional components beyond those shown in Figure 9 that may be responsible for providing certain aspects of the network node's functionalities, including any of the functionalities described above and/or any additional functionalities (including any functionality necessary to support the solutions described above). The various different types of network nodes may include components having the same physical hardware but configured (e.g., via programming) to support different radio access technologies, or may represent partly or entirely different physical components.

Processors, interfaces, and memory similar to those described with respect to Figures 8 and 9 may be included in other network nodes (such as core network node 130). Other network nodes may optionally include or not include a wireless interface (such as the transceiver described in Figures 8 and 9).

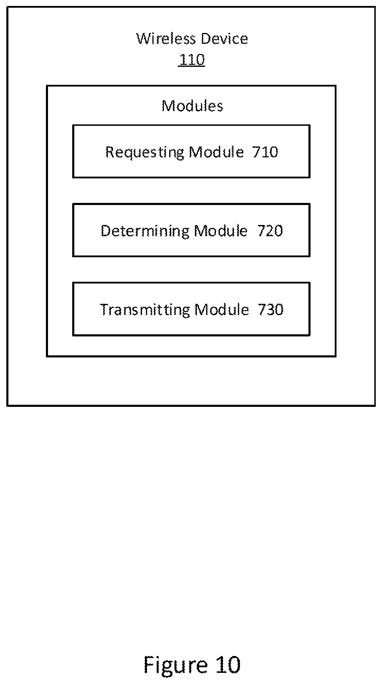

In some embodiments, the wireless device UE 110 may comprise a series of modules configured to implement the functionalities of the wireless device described above. Referring to Figure 10, in some embodiments, the wireless device 110 may comprise a requesting module 710 for transmitting a scheduling request to schedule transmission of a first type of data in a mini-slot, a determining module 720 for determining if the UE has any previously scheduled transmissions, and a transmitting module 730 for transmitting the first type of data in a mini-slot.

It will be appreciated that the various modules may be implemented as combination of hardware and software, for instance, the processor, memory and transceiver(s) of UE 110 shown in Figure 8. Some embodiments may also include additional modules to support additional and/or optional functionalities.

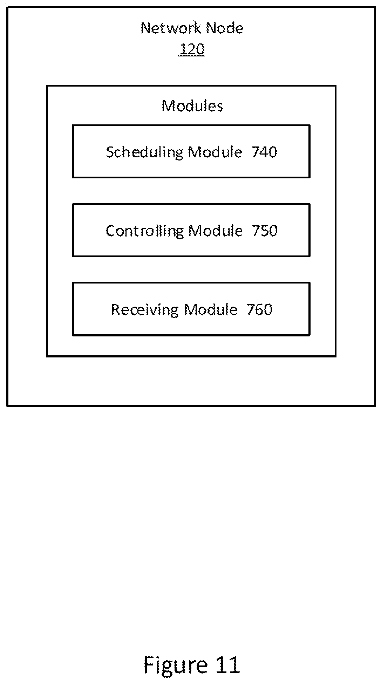

In some embodiments, the network node 120, which can be, for example, a radio access node, may comprise a series of modules configured to implement the functionalities of the network node described above. Referring to Figure 11, in some embodiments, the network node 120 can comprise a scheduling module 740 for receiving a scheduling request to schedule transmission of a first type of data in a mini-slot from a first UE, and for identifying previously scheduled transmission(s) of a second type of data for a second UE, a controlling module 750 for transmitting control information to the first UE and/or second UE as required, and a receiving module 760 for receiving data from the first UE in a mini-slot.

It will be appreciated that the various modules may be implemented as combination of hardware and software, for instance, the processor, memory and transceiver(s) of network node 120 shown in Figure 9. Some embodiments may also include additional modules to support additional and/or optional functionalities.

### Example of standardization scenario

In this section the possibilities and impact of URLLC puncturing of eMBB for UL data will be discussed.

For the puncturing in UL we can separate between two clear cases: URLLC data from UE1 punctures eMBB data from UE1 (same-UE puncturing), or URLLC data from UE1 punctures eMBB data from UE2 (different-UE puncturing). As the baseline, a URLLC UE with data should send SR, preferably on mini-slot level, for the gNB to act on as it sees fit. In the contribution we further assume that URLLC traffic will be mainly scheduled with mini-slots. It is however worth to note that some traffic scenarios that correspond the URLLC traffic does not require that strict latency requirement of mini-slots and can instead use slots.

### Same-UE puncturing

In this scenario the same UE has eMBB data and URLLC data. This may not be a very common scenario since a UE will likely focus on one traffic type during a certain time, either eMBB or URLLC. Also it will in any case be less frequently occurring that the same UE has the two types of UL in a given slot. However, we can consider an industrial robot sending critical sensor data while also streaming video to a control room. Therefore, we will anyway discuss the implications of this type of UL puncturing here.

For the case when a UE has both eMBB in an UL slot and URLLC data in an UL mini-slot we can also discriminate between some main scenarios.

In this case the UE has received a grant for a slot-length transmission, and it later receives a grant for a mini-slot transmission that are overlapping in time and are both on the same carrier. This second grant can be sent on a mini-slot basis and therefore have a different timing. In this case the latest received grant should be used by the UE, and the planned slot-length transmission should thus be cancelled.

An UL grant for a mini-slot can be given priority over an UL grant for a slot if the granted resources is associated overlap in time within the same carrier.

### Different-UE puncturing

The more commonly occurring case would be a UE1 having min-slot data to transmit on a resource granted or used by another UE2. An obvious problem for this scenario is that UE1 does not know what UE2 is planning or doing. Another problem is that the slot transmission can't be stopped when started or scheduled, unless new fast indication is added. Such indication could lead to significant burden for the UE and have large specification impact.

No special stop indication may be introduced for terminating an ongoing or scheduled slot/mini-slot transmission.

However, if a UE monitors a (mini-slot TTI) PDCCH, a UL DCI could be transmitted to the UE which would indicate a stop of transmission for the HARQ process in question.

Also for the case of different-UE puncturing we can discriminate between a few scenarios as outlined below.

### Granted collision

If UE1 sends a mini-slot timed SR to gNB and is given a mini-slot grant, it may well be so that the slot grant to UE2 was already sent. The gNB has thereby scheduled a collision on the resource during the puncturing. The two transmissions could be simultaneously decoded in the gNB, or one or both would fail, in which case gNB would schedule retransmission. The option to do so is allowed by the network.

The network is allowed to schedule colliding transmissions in UL.

Grant-free collision: contention-based access

In this case the UE1 is configured with an UL grant-free resource for mini-slot URLLC transmissions on a resource that has been granted to another UE2 for either eMBB or URLLC traffic. In the case of UE2 having the same mini-slot resource as UE1 this is grant-free contention-based transmission, as further discussed in [R1-1701871 On UL grant-free transmission, Ericsson, RAN1#88]. In the case UE2 is granted eMBB traffic the situation is similar to that of **Error! Reference source not found,** and [0180] with additional complexity.

Here, the gNB not only needs to detect the start of a new URLLC transmission, it also needs to identify the UE1. This will be more challenging since the two transmissions will collide, and if the received power is very different, the decoder may have difficulties with these tasks. Therefore, the value of such a solution should be studied further to be allowed. We again note that collisions are especially problematic for URLLC traffic.

The gain of allowing URLLC puncturing of other-UE eMBB transmission in UL should be clarified if allowed.

Some embodiments may be represented as a software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause processing circuitry (e.g. a processor) to perform steps in a method according to one or more embodiments. Those of ordinary skill in the art will appreciate that other instructions and operations necessary to implement the described embodiments may also be stored on the machine-readable medium. Software running from the machine-readable medium may interface with circuitry to perform the described tasks.

The above-described embodiments are intended to be examples only. Alterations, modifications and variations may be effected to the particular embodiments by those of skill in the art without departing from the scope of the present invention as defined in the appended claims.

### GLOSSARY

The present description may comprise one or more of the following abbreviation:
- 3GPP: Third Generation Partnership Project
- ACK: Acknowledgement
- AP: Access point
- ARQ: Automatic Repeat Request
- BS: Base Station
- BSC: Base station controller
- BTS: Base transceiver station
- CA: Carrier Aggregation
- CC: Component carrier
- CCCH SDU: Common Control Channel SDU
- CG: Cell group
- CGI: Cell Global Identifier
- CQI: Channel Quality information
- CSI: Channel State Information
- DAS: Distributed antenna system
- DC: Dual connectivity
- DCCH: Dedicated Control Channel
- DCI: Downlink Control Information
- DL: Downlink
- DMRS: Demodulation Reference Signal
- eMBB: Enhanced Mobile Broadband
- eNB: E-UTRAN NodeB or evolved NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDM: Frequency Division Multiplexing
- HARQ: Hybrid Automatic Repeat Request
- HO: Handover
- IoT: Internet of Things
- LTE: Long-Term Evolution
- M2M: Machine to Machine
- MAC: Medium Access Control
- MBMS: Multimedia Broadcast Multicast Services
- MCG: Master cell group
- MDT: Minimization of Drive Tests
- MeNB: Master eNode B
- MME: Mobility Management Entity
- MSC: Mobile Switching Center
- MSR: Multi-standard Radio
- MTC: Machine Type Communication
- NACK: Negative acknowledgement
- NDI: Next Data Indicator
- NR: New Radio
- O&M: Operation and Maintenance
- OFDM: Orthogonal Frequency Division Multiplexing
- OFDMA: Orthogonal Frequency Division Multiple Access
- OSS: Operations Support System
- PCC: Primary Component Carrier
- P-CCPCH: Primary Common Control Physical Channel
- PCell: Primary Cell
- PCG: Primary Cell Group
- PCH: Paging Channel
- PCI: Physical Cell Identity
- PDCCH: Physical Downlink Control Channel
- PDSCH: Physical Downlink Shared Channel
- PDU: Protocol Data Unit
- PGW: Packet Gateway
- PHICH: Physical HARQ indication channel
- PMI: Precoder Matrix Indicator
- ProSe: Proximity Service
- PSC: Primary serving cell
- PSCell: Primary SCell
- PUCCH: Physical Uplink Control Channel
- PUSCH: Physical Uplink Shared Channel
- RAT: Radio Access Technology
- RB: Resource Block
- RF: Radio Frequency
- RLM: Radio Link Management
- RNC: Radio Network Controller
- RRC: Radio Resource Control
- RRH: Remote Radio Head
- RRM: Radio Resource Management
- RRU: Remote Radio Unit
- RSRP: Reference Signal Received Power
- RSRQ: Reference Signal Received Quality
- RSSI: Received Signal Strength Indicator
- RSTD: Reference Signal Time Difference
- RTT: Round Trip Time
- SCC: Secondary Component Carrier
- SCell: Secondary Cell
- SCG: Secondary Cell Group
- SCH: Synchronization Channel
- SDU: Service Data Unit
- SeNB: Secondary eNodeB
- SGW: Serving Gateway
- SI: System Information
- SIB: System Information Block
- SINR: Signal to Interference and Noise Ratio
- SNR: Signal Noise Ratio
- SPS: Semi-persistent Scheduling
- SON: Self-organizing Network
- SR: Scheduling Request
- SRS: Sounding Reference Signal
- SSC: Secondary Serving Cell
- TTI: Transmission Time Interval
- Tx: Transmitter
- UE: User Equipment
- UL: Uplink
- URLLC: Ultra-Reliable Low Latency Communication
- UTRA: Universal Terrestrial Radio Access
- UTRAN: Universal Terrestrial Radio Access Network
- V2V: Vehicle-to-vehicle
- V2X: Vehicle-to-everything
- WLAN: Wireless Local Area Network

## Claims

1. A method performed by a network node (120A), the method comprising:
receiving (300), from a first wireless device (110A), a scheduling request to schedule transmission of a first type of data in a mini-slot, wherein the scheduling request is received in a first mini-slot, m, wherein the received scheduling request is a Ultra Reliable Low Latency Communications Scheduling Request, URLLC-SR, message;
identifying (310) ongoing and upcoming slot transmission from at least one second wireless device, wherein said identifying includes determining (310) that said w second wireless device (110B) has a previously scheduled transmission of a second type of data in a slot overlapping with the requested mini-slot;
transmitting (340), to the second wireless device (110B), a first control message in a mini-slot m+k, where k is greater than or equal to 1, said first control message is a Downlink Control Information, DCI, message indicating to cancel transmission of the second type of data that overlaps with the requested mini-slot; and
receiving (360), from the first wireless device, the first type of data in the requested mini-slot, wherein the first type of data is received in the requested mini-slot m+k+l, where l is greater than or equal to 1.

2. A network node (120A) comprising circuitry including a processor and a memory, the memory containing instructions executable by the processor whereby the network node is operative to:
receive (300), from a first wireless device (110A), a scheduling request to schedule transmission of a first type of data in a mini-slot, wherein the scheduling request is received in a first mini-slot, m, wherein the received scheduling request is a Ultra Reliable Low Latency Communications Scheduling Request, URLLC-SR, message;
identify (310) ongoing and upcoming slot transmission from at least one second wireless device, wherein the network node being operative to identify includes the network node being operative to determine (310) that said second wireless device (110B) has a previously scheduled transmission of a second type of data in a slot overlapping with the requested mini-slot;
transmit (340), to the second wireless device (110B), a first control message in a mini-slot m+k, where k is greater than or equal to 1, said first control message is a Downlink Control Information, DCI, message indicating to cancel transmission of the second type of data that overlaps with the requested mini-slot; and
receive (360), from the first wireless device (110A), the first type of data in the requested mini-slot, wherein the first type of data is received in the requested mini-slot m+k+l, where l is greater than or equal to 1.

3. The network node of claim 2, wherein the first control message further indicates a grant for re-transmission of the second type of data.

4. The network node of any of claims 2 to 3, further operative to transmit, to the first wireless device, a second control message indicating that the mini-slot is granted for transmission of the first type of data.

5. The network node of any of claims 2 to 4, wherein the previously scheduled transmission of the second type of data and the requested mini-slot are overlapping in at least one of time and frequency resources.

6. The network node of any of claims 2 to 5, wherein the first control message indicates to cancel transmission of the second type of data in a slot overlapping with the requested mini-slot.

7. The network node of any of claim 2 to 6, wherein the first control message indicates to cancel transmission of the second type of data in a mini-slot overlapping with the requested mini-slot.

8. The network node of any of claims 2 to 7, further operative to determine that the first wireless device and the second wireless device are a same device.

9. The network node of any of claims 2 to 8, further operative to determine that the first type of data is prioritized for transmission over the second type of data.

10. The network node of any of claims 2 to 9, wherein the first type of data is Ultra-Reliable Low Latency Communication, URLLC, traffic and the second type of data is enhanced Mobile Broadband, eMBB, traffic.

11. A method performed by a wireless device (110B), the method comprising:
receiving (400), from a network node (120A), a control message in a mini-slot m+k, where m denotes an earlier mini-slot and k is greater than or equal to 1, said control message is a Downlink Control Information, DCI, message indicating to cancel transmission of its data in a mini-slot m+k+l, where 1 is greater than or equal to 1;
identifying (410) a previously scheduled slot transmission of its data in a slot overlapping with the mini-slot m+k+1; and
the cancelling (420) transmission of its data from the indicated mini-slot m+k+l, that is identified as overlapping with previously scheduled slot transmission.

12. A wireless device (110B) comprising circuitry including a processor and a memory, the memory containing instructions executable by the processor whereby the second wireless device is operative to:
receive (400), from a network node (120A), a control message in a mini-slot m+k, where m denotes an earlier mini-slot and k is greater than or equal to 1, said control message is a Downlink Control Information, DCI, message indicating to cancel transmission of its data in a mini-slot m+k+l, where l is greater than or equal to 1;
identify (410) a previously scheduled slot transmission of its data in a slot overlapping with the mini-slot m+k+l; and
the cancel (420) transmission of its data from the indicated mini-slot m+k+l, that is identified as overlapping with previously scheduled slot transmission.

13. The wireless device of claim 12, wherein the control message further indicates a grant for re-transmission of the cancelled data transmission.

## Patentansprüche

1. Verfahren, das von einem Netzwerkknoten (120A) durchgeführt wird, wobei das Verfahren umfasst:
Empfangen (300) einer Dispositionsanforderung von einer ersten drahtlosen Vorrichtung (110A) zum Disponieren von Übertragung eines ersten Typs von Daten in einem Minischlitz, wobei die Dispositionsanforderung in einem ersten Minischlitz m empfangen wird, wobei die empfangene Dispositionsanforderung eine Ultra-Reliable-Low-Latency-Communication-Dispositionsanforderungs-,URLLC-SR-,Nachricht ist;
Identifizieren (310) von laufender und bevorstehender Schlitzübertragung von mindestens einer zweiten drahtlosen Vorrichtung, wobei das Identifizieren ein Bestimmen (310) umfasst, dass die zweite drahtlose Vorrichtung (110B) eine vorher disponierte Übertragung eines zweiten Typs von Daten in einem Schlitz aufweist, der sich mit dem angeforderten Minischlitz überlappt;
Senden (340) einer ersten Steuernachricht in einem Minischlitz m + k an die zweite drahtlose Vorrichtung (110B), wobei k größer oder gleich 1 ist, wobei die erste Steuernachricht eine Downlink-Steuerinformations-,DCI-, Nachricht zum Annullieren der Übertragung des zweiten Typs von Daten ist, die sich mit dem angeforderten Minischlitz überlappt; und
Empfangen (360) des ersten Typs von Daten im angeforderten Minischlitz von der ersten drahtlosen Vorrichtung, wobei der erste Typ von Daten im angeforderten Minischlitz m + k + l empfangen wird, wobei l größer oder gleich 1 ist.

2. Netzwerkknoten (120A), umfassend Schaltungsanordnung, die einen Prozessor und einen Speicher umfasst, wobei der Speicher Anweisungen enthält, die vom Prozessor ausgeführt werden können, wodurch der Netzwerkknoten ausgelegt ist zum:
Empfangen (300) einer Dispositionsanforderung von einer ersten drahtlosen Vorrichtung (110A) zum Disponieren von Übertragung eines ersten Typs von Daten in einem Minischlitz, wobei die Dispositionsanforderung in einem ersten Minischlitz m empfangen wird, wobei die empfangene Dispositionsanforderung eine Ultra-Reliable-Low-Latency-Communication-Dispositionsanforderungs-,URLLC-SR-,Nachricht ist;
Identifizieren (310) von laufender und bevorstehender Schlitzübertragung von mindestens einer zweiten drahtlosen Vorrichtung, wobei, dass der Netzwerkknoten zum Identifizieren ausgelegt ist, umfasst, dass der Netzwerkknoten zum Bestimmen (310) ausgelegt ist, dass die zweite drahtlose Vorrichtung (110B) eine vorher disponierte Übertragung eines zweiten Typs von Daten in einem Schlitz aufweist, die sich mit dem angeforderten Minischlitz überlappt;
Senden (340) einer ersten Steuernachricht in einem Minischlitz m + k an die zweite drahtlose Vorrichtung (110B), wobei k größer oder gleich 1 ist, wobei die erste Steuernachricht eine Downlink-Steuerinformations-,DCI-, Nachricht zum Annullieren der Übertragung des zweiten Typs von Daten ist, die sich mit dem angeforderten Minischlitz überlappt; und
Empfangen (360) des ersten Typs von Daten im angeforderten Minischlitz von der ersten drahtlosen Vorrichtung (110A), wobei der erste Typ von Daten im angeforderten Minischlitz m + k + l empfangen wird, wobei l größer oder gleich 1 ist.

3. Netzwerkknoten nach Anspruch 2, wobei die erste Steuernachricht ferner eine Freigabe für Neuübertragung des zweiten Typs von Daten anzeigt.

4. Netzwerkknoten nach einem der Ansprüche 2 bis 3, ferner ausgelegt zum Senden einer zweiten Steuernachricht, die anzeigt, dass der Minischlitz zur Übertragung des ersten Typs von Daten freigegeben ist, an die erste drahtlose Vorrichtung.

5. Netzwerkknoten nach einem der Ansprüche 2 bis 4, wobei die vorher disponierte Übertragung des zweiten Typs von Daten und der angeforderte Schlitz einander in mindestens einer von Zeit- und Frequenzressourcen überlappen.

6. Netzwerkknoten nach einem der Ansprüche 2 bis 5, wobei die erste Steuernachricht Annullierung der Übertragung des zweiten Typs von Daten in einem Schlitz anzeigt, der sich mit dem angeforderten Minischlitz überlappt.

7. Netzwerkknoten nach einem der Ansprüche 2 bis 6, wobei die erste Steuernachricht Annullierung der Übertragung des zweiten Typs von Daten in einem Minischlitz anzeigt, der sich mit dem angeforderten Minischlitz überlappt.

8. Netzwerkknoten nach einem der Ansprüche 2 bis 7, ferner ausgelegt zum Bestimmen, dass die erste drahtlose Vorrichtung und die zweite drahtlose Vorrichtung eine gleiche Vorrichtung sind.

9. Netzwerkknoten nach einem der Ansprüche 2 bis 8, ferner ausgelegt zum Bestimmen, dass der erste Typ von Daten zur Übertragung gegenüber dem zweiten Typ von Daten priorisiert ist.

10. Netzwerkknoten nach einem der Ansprüche 2 bis 9, wobei es sich beim ersten Typ von Daten um Ultra-Reliable-Low-Latency-Communication-,URLLC-,Verkehr handelt und es sich beim zweiten Typ von Daten um enhanced-Mobile-Broadband-,eMBB-,Verkehr handelt.

11. Verfahren, das von einer drahtlosen Vorrichtung (110B) durchgeführt wird, wobei das Verfahren umfasst:
Empfangen (400) einer Steuernachricht von einem Netzwerkknoten (120A) in einem Minischlitz m + k, wobei m einen früheren Minischlitz bezeichnet und k größer oder gleich 1 ist, wobei die Steuernachricht eine Downlink-Steuerinformations-,DCI-,Nachricht ist, die Annullierung der Übertragung ihrer Daten in einem Minischlitz m + k + l anzeigt, wobei l größer oder gleich 1 ist;
Identifizieren (410) einer vorher disponierten Schlitzübertragung ihrer Daten in einem Schlitz, der sich mit dem Minischlitz m + k + l überlappt; und
Annullieren (420) der Übertragung ihrer Daten aus dem angezeigten Minischlitz m + k + l, der als sich mit der vorher disponierten Schlitzübertragung überlappend identifiziert wurde.

12. Drahtlose Vorrichtung (110B), umfassend Schaltungsanordnung, die einen Prozessor und einen Speicher umfasst, wobei der Speicher Anweisungen enthält, die vom Prozessor ausgeführt werden können, wodurch die drahtlose Vorrichtung ausgelegt ist zum:
Empfangen (400) einer Steuernachricht von einem Netzwerkknoten (120A) in einem Minischlitz m + k, wobei m einen früheren Minischlitz bezeichnet und k größer oder gleich 1 ist, wobei die Steuernachricht eine Downlink-Steuerinformations-,DCI-,Nachricht ist, die Annullierung der Übertragung ihrer Daten in einem Minischlitz m + k + l anzeigt, wobei l größer oder gleich 1 ist;
Identifizieren (410) einer vorher disponierten Schlitzübertragung ihrer Daten in einem Schlitz, der sich mit dem Minischlitz m + k + l überlappt; und
Annullieren (420) der Übertragung ihrer Daten aus dem angezeigten Minischlitz m + k + l, der als sich mit der vorher disponierten Schlitzübertragung überlappend identifiziert wurde.

13. Drahtlose Vorrichtung nach Anspruch 12, wobei die Steuernachricht ferner eine Freigabe für Neuübertragung der annullierten Datenübertragung anzeigt.

## Revendications

1. Procédé réalisé par un noeud de réseau (120A), le procédé comprenant :
la réception (300), depuis un premier dispositif sans fil (110A), d'une demande d'ordonnancement pour ordonnancer une transmission d'un premier type de données dans un mini-créneau, dans lequel la demande d'ordonnancement est reçue dans un premier mini-créneau, m, dans lequel la demande d'ordonnancement reçue est un message de demande d'ordonnancement de communication à faible latence ultra-fiable, URLLC-SR ;
l'identification (310) d'une transmission de créneau en cours et à venir depuis au moins un deuxième dispositif sans fil, dans lequel ladite identification inclut la détermination (310) que ledit deuxième dispositif sans fil (110B) a une transmission préalablement ordonnancée d'un deuxième type de données dans un créneau chevauchant le mini-créneau demandé ;
la transmission (340), au deuxième dispositif sans fil (110B), d'un premier message de commande dans un mini-créneau m+k, où k est supérieur ou égal à 1, ledit premier message de commande est un message d'informations de commande de liaison descendante, DCI, indiquant d'annuler une transmission du deuxième type de données qui chevauche le mini-créneau demandé ; et
la réception (360), depuis le premier dispositif sans fil, du premier type de données dans le mini-créneau demandé,
dans lequel le premier type de données est reçu dans le mini-créneau demandé m+k+l, où 1 est supérieur ou égal à 1.

2. Noeud de réseau (120A) comprenant une circuiterie incluant un processeur et une mémoire, la mémoire contenant des instructions exécutables par le processeur de telle manière que le noeud de réseau soit opérationnel pour :
recevoir (300), depuis un premier dispositif sans fil (110A), une demande d'ordonnancement pour ordonnancer une transmission d'un premier type de données dans un mini-créneau, dans lequel la demande d'ordonnancement est reçue dans un premier mini-créneau, m, dans lequel la demande d'ordonnancement reçue est un message de demande d'ordonnancement de communication à faible latence ultra-fiable, URLLC-SR ;
identifier (310) une transmission de créneau en cours et à venir depuis au moins un deuxième dispositif sans fil, dans lequel le noeud de réseau étant opérationnel pour identifier inclut le noeud de réseau étant opérationnel pour déterminer (310) que ledit deuxième dispositif sans fil (110B) a une transmission préalablement ordonnancée d'un deuxième type de données dans un créneau chevauchant le mini-créneau demandé ;
transmettre (340), au deuxième dispositif sans fil (110B), un premier message de commande dans un mini-créneau m+k, où k est supérieur ou égal à 1, ledit premier message de commande est un message d'informations de commande de liaison descendante, DCI, indiquant d'annuler une transmission du deuxième type de données qui chevauche le mini-créneau demandé ; et
recevoir (360), depuis le premier dispositif sans fil (110A), le premier type de données dans le mini-créneau demandé, dans lequel le premier type de données est reçu dans le mini-créneau demandé m+k+l, où l est supérieur ou égal à 1.

3. Noeud de réseau selon la revendication 2, dans lequel le premier message de commande indique en outre un octroi pour une retransmission du deuxième type de données.

4. Noeud de réseau selon la revendication 2 ou 3, en outre opérationnel pour transmettre, au premier dispositif sans fil, un deuxième message de commande indiquant que le mini-créneau est octroyé pour une transmission du premier type de données.

5. Noeud de réseau selon l'une quelconque des revendications 2 à 4, dans lequel la transmission préalablement ordonnancée du deuxième type de données et le mini-créneau demandé se chevauchent dans au moins l'une de ressources de temps et de fréquences.

6. Noeud de réseau selon l'une quelconque des revendications 2 à 5, dans lequel le premier message de commande indique d'annuler une transmission du deuxième type de données dans un créneau chevauchant le mini-créneau demandé.

7. Noeud de réseau selon l'une quelconque des revendications 2 à 6, dans lequel le premier message de commande indique d'annuler une transmission du deuxième type de données dans un mini-créneau chevauchant le mini-créneau demandé.

8. Noeud de réseau selon l'une quelconque des revendications 2 à 7, en outre opérationnel pour déterminer que le premier dispositif sans fil et le deuxième dispositif sans fil sont un même dispositif.

9. Noeud de réseau selon l'une quelconque des revendications 2 à 8, en outre opérationnel pour déterminer que le premier type de données est priorisé pour une transmission par rapport au deuxième type de données.

10. Noeud de réseau selon l'une quelconque des revendications 2 à 9, dans lequel le premier type de données est un trafic de communication à faible latence ultra-fiable, URLLC, et le deuxième type de données est un trafic à haut débit mobile amélioré, eMBB.

11. Procédé réalisé par un dispositif sans fil (110B), le procédé comprenant :
la réception (400), depuis un noeud de réseau (120A), d'un message de commande dans un mini-créneau m+k, où m représente un mini-créneau antérieur et k est supérieur ou égal à l, ledit message de commande est un message d'informations de commande de liaison descendante, DCI, indiquant d'annuler une transmission de ses données dans un mini-créneau m+k+l, où l est supérieur ou égal à 1 ;
l'identification (410) d'une transmission de créneau préalablement ordonnancée de ses données dans un créneau chevauchant le mini-créneau m+k+l ; et
l'annulation (420) d'une transmission de ses données depuis le mini-créneau m+k+l indiqué qui est identifié comme chevauchant une transmission de créneau préalablement ordonnancée.

12. Dispositif sans fil (110B) comprenant une circuiterie incluant un processeur et une mémoire, la mémoire contenant des instructions exécutables par le processeur de telle manière que le deuxième dispositif sans fil soit opérationnel pour :
recevoir (400), depuis un noeud de réseau (120A), un message de commande dans un mini-créneau m+k, où m représente un mini-créneau antérieur et k est supérieur ou égal à l, ledit message de commande est un message d'informations de commande de liaison descendante, DCI, indiquant d'annuler une transmission de ses données dans un mini-créneau m+k+l, où 1 est supérieur ou égal à 1 ;
identifier (410) une transmission de créneau préalablement ordonnancée de ses données dans un créneau chevauchant le mini-créneau m+k+l ; et
annuler (420) une transmission de ses données depuis le mini-créneau m+k+l indiqué qui est identifié comme chevauchant une transmission de créneau préalablement ordonnancée.

13. Dispositif sans fil selon la revendication 12, dans lequel le message de commande indique en outre un octroi pour une retransmission de la transmission de données annulée.
